# EUROPÄISCHE PATENTSCHRIFT

(11) **EP 0 863 794 B1**
(45) Veröffentlichungstag und Bekanntmachung des Hinweises auf die Patenterteilung: **16.01.2002**
(21) Anmeldenummer: 97931971.2
(22) Anmeldetag: 28.07.1997
(51) Int. Cl.: B01F 3/04, C02F 1/00, C02F 1/78, A61L 2/00

(54) **VERFAHREN UND ANLAGE ZUM EINBRINGEN EINES GASES IN EINE FLÜSSIGKEIT**
PROCESS AND PLANT FOR INTRODUCING A GAS INTO A LIQUID
PROCEDE ET INSTALLATION POUR INTRODUIRE UN GAZ DANS UN LIQUIDE

(30) Priorität: 01.08.1996 CH 189896
(43) Veröffentlichungstag der Anmeldung: 16.09.1998
(73) Patentinhaber: Wiederkehr, Hans, Dr., 8315 Lindau (CH)
(72) Erfinder: BUCHHORN, Gero, Joachim, I-12100 Varese (IT)
(74) Vertreter: Weiss, Peter, Dr. rer. nat.
(86) Internationale Anmeldenummer: IB9700930
(87) Internationale Veröffentlichungsnummer: WO9805415

(56) Entgegenhaltungen:
- WO-A-94/08707
- DE-U- 9 420 518

## Beschreibung

Die vorliegende Erfindung betrifft ein Verfahren zum Einbringen von einem oxidierenden Gas oder Gasgemisch in Wasser, wobei das Gas oder Gasgemisch und das Wasser auf getrennten Pfaden herangebracht werden, das Wasser längs dem zweiten Pfad durch eine erste Feinstfilterung gereinigt, danach einer Verwirbelung bzw. Versprühung unterzogen und anschliessend mit dem Gas oder Gasgemisch aus dem ersten Pfad zusammengeführt wird und das Gas/Wassergemisch längs einem dritten Pfad einer weiteren Feinstfilterung zugeführt wird.

Wasser zeigt bekanntlich aussergewöhnliche Eigenschaften als Lösungsmittel und hat die Tendenz, die meisten Stoffe, mit denen es in Berührung kommt, in sich zu lösen. Seine herausragenden thermischen Eigenschaften stempeln es ausserdem zum idealen Wärmetransportmittel.

Es hat sich nun gezeigt, dass Wasser, welches mit Gas, insbesondere Sauerstoff, angereichert ist, ausgezeichnet für therapeutische Anwendungen bei Mensch und Tier geeignet ist; daher wird Leitungswasser, das mit O₂, O₃ und/oder CO₂ angereichert ist, in grösseren Mengen beispielsweise als verbessertes Trinkwasser, gebraucht. Bis heute kann solch verbessertes Trinkwasser jedoch nur grosstechnisch oder mit erheblichem Aufwand hergestellt werden.

Es ist in diesem Zusammenhang bekannt, Wasser zur Verbesserung seiner Qualität zu ozonieren, was aber den Nachteil hat, dass einerseits die dazu verwendeten Verfahren meist energieverschleissend sind und andererseits das eingebracht Ozon (O₃) oft mit Verschmutzungen des Wassers, zum Beispiel mit anorganischen Schwebeteilchen, reagiert und das eingebrachte Ozon dadurch aufgebraucht wird, ohne seinen Nutzeffekt als Wasserverbesserer zu erreichen.

Aus der US 3 779 909 ist es bekannt, in einer Wasserreinigungsanlage das Wasser mit sauerstoffenthaltenden Gas zu behandeln. Hierzu wird das Gas durch mehrere Filter geführt und im Gegenstrom das sauerstoffenthaltende Gas eingeführt.

Aus der EP-A 0 214 105 ist beispielsweise ein Verfahren zum Einführen und Binden von Gas, wie beispielsweise Sauerstoff, Luft oder Kohlendioxid, in Wasser bekannt, nach welchem ein Wasserstrom, der mit dem Gas angereichert ist, eine Reaktionskammer passiert, so dass der Strom in sich rotiert und sich entlang der Längsachse bewegt, wobei ein plötzliches Druckminimum vorgesehen wird, in einem Bereich dieser Achse, in welchem das Gas, welches sich in dem Strom befindet, gesammelt und mit Dampf gemischt wird, wobei nach dem Minimum der Druck erhöht wird, wodurch Gas durch das Wasser aufgenommen wird, so dass Gasmoleküle an die Wassermoleküle gebunden werden.

Ein Verfahren der o. g. Art ist aus der DE-U 94 20 518 bekannt. Dort wird eine Vorrichtung zum Anreichern von Sauerstoff in einer trinkbaren, wässrigen Flüssigkeit, insbesondere Trinkwasser gezeigt. Hierbei ist an eine Flüssigkeitsquelle eine Pumpe angeschlossen, welche die Flüssigkeit mit hoher Geschwindigkeit einer Ejektoreinheit zuführt. Die Ejektoreinheit ist an eine sauerstoffabgebende Gasquelle angeschlossen. Der Ejektoreinheit ist ein spiraliges Rohrsystem nachgeschaltet, hinter welchem eine Zapfstelle für das Gemisch vorgesehen ist.

Aufgabe der vorliegenden Erfindung ist es, ein Verfahren und eine Anlage aufzuzeigen, mit dem/der Gas, insbesondere O₂, O₃ und/oder CO₂ auf einfache Weise in Wasser, ohne Benutzung aufwendiger chemischer und/oder physikalischer Verfahren bzw. Vorrichtungen, eingebracht werden kann.

Diese Aufgabe wird erfindungsgemäss durch die Merkmale der kennzeichnenden Teile der Patentansprüche 1 bzw. 6 gelöst.

Das Gas wird längs einem ersten Pfad bzw. Leitungssystem-Ast auf etwa Zimmertemperatur vortemperiert, während die Flüssigkeit auf einem zweiten, dem ersten parallelen Pfad bzw. Leitungssystem-Ast über eine Flüssigkeits-Feinstfilteranordnung gereinigt und daran anschliessend einer Verwirbelung bzw. Versprühung unterzogen wird. Daraufhin werden der erste und der zweite Pfad bzw. Leitungssystem-Ast zu einem dritten Pfad bzw. Leitungssystem-Ast zusammengeführt, indem man die Flüssigkeit über einen ersten Eingang und das Gas über einen zweiten Eingang einer Injektoreinheit zuführt, mittels welcher aus dem Gas und der Flüssigkeit ein Gas/Flüssigkeitsgemisch erzeugt wird. Anschliessend gelangt das in der Injektoreinheit entstandenen Gas/Flüssigkeits-Gemisch in eine Gemisch-Feinstfilteranlage und von dieser über einen Gemisch-Druckbegrenzer zum Ausgang des Leitungssystems.

Das Verfahren und die Vorrichtung nach der Erfindung werden hauptsächlich zum Einbringen von Sauerstoff und/oder Kohlendioxyd in Wasser verwendet, wobei eine Einbringung von ca. 60 mg Sauerstoff pro Liter Wasser angestrebt wird, das letzlich eine Temperatur von 10° C bis 25° C hat. 95 % dieses Sauerstoffes sollen beirn Trinken des Wassers noch vorhanden sein.

Vorzugsweise wird das Gas in einem Gas-Druckregler auf einen Druck gebracht, der unter dem Druck der Flüssigkeit liegt.

Durch die Anordnung der Gemisch-Feinstfilteranlage im dritten Leitungssystem-Ast, durch welche das Gas/Flüssigkeits-Gemisch strömt, wird das neue Verfahrens effizient. Als Gas/Flüssigkeits-Feinstfilteranlage kommt eine Feinstfilteranlage, wie sie im Patent EP-0-554 223 B1 beschrieben ist, erfindungsgemäß zum Einsatz.

Weitere Eigenschaften und Vorteile der Erfindung werden nachstehend anhand eines Ausführungsbeispiels einer erfindungsgemässen Anlage und mit Bezug auf die Zeichnung näher erläutert. Dabei zeigt:

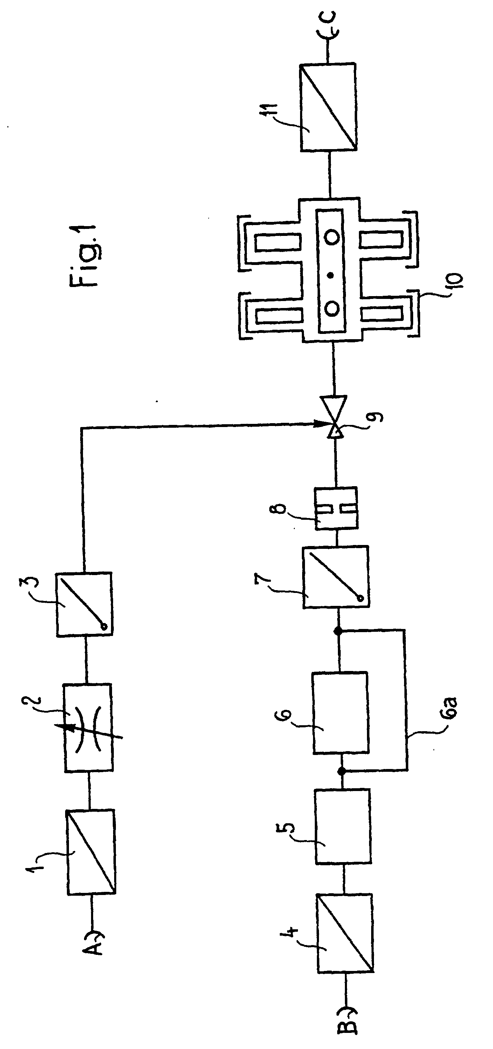

- **Fig. 1**: eine Anlage zur Herstellung einer mit Gas oder einem Gasgernisch angereicherten Flüssigkeit, in einer vereinfachten schematischen Darstellung.

Die in **Fig. 1** dargestellte Anlage **12** dient zur Herstellung von mit Gas angereicherter Flüssigkeit und weist einen ersten Leitungssystem-Ast A auf, an dessen Eingang Mittel zur Einspeisung eines geeigneten Gases wie beispielsweise O₂, O₃, CO₂ vorgesehen sind. Das eingespeiste Gas wird über einen Gas-Druckregler 1 geführt, der so eingestellt ist, dass sich sein Ausgangsdruck vom Druck der mit dem Gas anzureichernden Flüssigkeit unterscheidet und im vorliegenden Fall ca 0,5 bar tiefer ist als der Druck der anzureichernden Flüssigkeit. Im dargelegten Ausführungsbeispiel hat das Gas eine Temperatur von 20°C und einen Druck von **3,5** bar. Der Ausgang des Gas-Druckreglers wird über eine Mengen-Dosierungsdrossel **2** einem Gas-Rückschlagventil 3 zugeführt, mit dem ein Rückströmen des Gases verhindert wird.

Über einen zweiten Leitungssystem-Ast **B** der Anlage **12** wird als Flüssigkeit 'normales' Wasser, beispielsweise aus einem Verteilnetz, mit einer Temperatur von **10** bis 14°C und einem Druck von 4,0 bar zugeführt. Unter 'normalem' Wasser soll verstanden werden, dass es sich nicht um chemisch reines H2O, jedoch auch nicht um wirklich verschmutztes Wasser handelt. Der Leitungssystem-Ast **B** weist einen Flüssigkeits-Druckregler **4** auf, dessen Ausgang mit dem Eingang einer Flüssigkeits-Feinstfilteranordnung **5** verbunden ist Der Flüssigkeits-Druckregler **4** ist vorzugsweise für einen Einstellbereich von mindestens 4 bis **8** bar ausgelegt.

Die Flüssigkeits-Feinstfilteranordnung **5,** die in aller Regel aus einem Aktivkohlefilter besteht oder einen solchen umfasst, hat die Aufgabe, die Flüssigkeit von allen darin enthaltenen anorganischen Partikeln, organischen Substanzen und Keimen zu befreien, um zu verhindern, dass eine Reaktion derselben mit dem einzubringenden Gas, im allgemeinen eine Oxydation mit dem Sauerstoff des einzubringenden Gases, erfolgt. Die Flüssigkeits-Feinstfilteranordnung **5** weist eine Filterfeinheit von wenigstens 0,5 µ, vorzugsweise 0,3 µ, auf.

Der Ausgang der Flüssigkeits-Feinstfilteranordnung **5** ist mit einem Flüssigkeits-Rückschlagventil **7** verbunden, welches die Aufgabe hat, ein Rückströmen des Wassers zu verhindern.

Vorzugsweise ist zwischen der Flüssigkeits-Feinstfilteranordnung **5** und dem Flüssigkeits-Rückschlagventil **7** ein Kühler **6** angeordnet; dabei hat es sich als günstig erwiesen, eine Beipassleitung **6a** vorzusehen, durch welche der Kühler **6** überbrückt werden kann. Der Kühler 6 kühlt das Wasser auf eine ideale Einmischtemperatur von 4°C herunter.

Der Ausgang des Flüssigkelts-Rückschlagventils **7** ist mit einer Verwirbelungsdüse **8** verbunden. In dieser Verwirbelungsdüse **8** wird die durchströmende Flüssigkeit besonders fein verteilt, so dass sie aufnahmefähiger für einzulagerndes Gas wird.

Der Ausgang der Verwirbelungsdüse **8** ist mit einem ersten Eingang einer Injektoreinheit **9** verbunden, deren zweiter Eingang an den Ausgang des Gas-Rückschlagventils **3** angeschlossen ist. Bei der injektoreinheit **9,** mittels welcher das Gas in die Flüssigkeit eingebracht bzw. ein Gas/Flüssigkeits-Gemisch erzeugt wird, vereinigen sich somit die beiden parallelen Leitungssystem-Äste **A** und **B** für das Gas bzw. die Flüssigkeit zu einem einzigen Leitungssystemast C für das in der injektoreinheit **9** entstehende Gas/Flüssigkeits-Gemisch. Der Ausgang der Injektoreinheit **9** ist mit dem Eingang einer Gemisch-Feinstfilteranlage **10** verbunden. Diese Gemisch-Feinstfilteranlage **10** hat die Aufgabe, das Gas/Flüssigkeits-Gemisch durch eine oder mehrere Filtereinheiten mit grösstmöglicher innerer Oberfläche zu treiben, um das Gas optimal in der Flüssigkeit zu verteilen und 'einzuprägen'.

Damit wird erreicht, dass die Gasmoleküle und die Flüssigkeitsmoleküle zu einem clusterähnlichen Gebilde werden. In welchem die Gasmoleküle von den Flüssigkeitsmolekülen gewissermassen umhüllt und dadurch so abgeschirmt werden, dass jede Reaktion der Gasmoleküle mit Fremdpartikeln, im allgemeinen also jede Oxydation von Fremdpartikeln, verhindert wird, da durch eine solche Reaktion bzw. Oxydation das Gas In unerwünschter Weise verbraucht würde.

Es liegt auf der Hand. dass das Verfahren nur zu einem befriedigenden Resultat führt, wenn die Flüssigkeit in der Flüssigkeits-Feinstilteranordnung **5** genügend vorgereinigt wird, da sich sonst im Cluster eine Reaktion der die Flüssigkeit verschmutzenden Stoffe mit dem Gases, insbesondere eine Oxydation der genannten Stoffe mit dem Sauerstoff des Gases, abspielt, wodurch dieses Gas und Insbesondere der Sauerstoff verbraucht wird, so dass er nicht zur Anreicherung der Flüssigkeit erhalten bleibt. Durch die Reinigung der Flüssigkeit in der Flüssigkeits-Felnstfilteranordnung **5** wird also die Flüssigkeit gereinigt, wodurch sie Kapazität zur Aufnahme und Beibehaltung des Gases erwirbt.

Durch die Gemisch-Feinstfilteranlage **10** wird, bei einer inneren Oberfläche von ca. 1'000'000 m² pro Filterblock einer Filtereinheit, wie sie durch die vorbekannte EP-0 554 223 B1 beschrieben ist, gewährleistet, dass das Gas und die Flüssigkeit optimal in Verteilung und Vermengung gebracht werden. Durch die grosse Filterfeinheit von unter 0,5 µ, vorzugsweise 0,3 µ, die grosse Oberfläche und eine Verweilzeit von vorzugsweise ca. 15 Minuten in der Gemisch-Feinstfilteranlage **10** wird eine feinste Verteilung des der Flüssigkeit beigemengten Gases in der Flüssigkeit erreicht.

Der Ausgang der Gemisch-Feinstfilteranlage **10** wird über einen Gemisch-Druckregler **11** mit einem Ausgangsdruck von mindestens 2 bar mit dem Ausgangsast **C** der Anlage verbunden. Der Gemisch-Druckregler **11** sorgt dafür, dass ein vorzeitiges Entweichen der gelösten Gase aus der Flüssigkeit verhindert wird.

Am Ausgang des Leitunggssystem-Astes **C** kann ein Abfüllventil vorgesehen sein, von dem aus die mit Gas angereicherte Flüssigkeit bzw. das mit Gas angereicherte Wasser entweder zum sofortigen Gebrauch in Gläser oder in Flaschen oder andere Behälter abgefüllt werden kann.

Durch das neue Verfahren kann erreicht werden, dass auch in verhältnismässig warmen Wasser von beispielsweise etwa 40° C nach mehreren Stunden noch 50 % des eingebrachten Gases vorhanden ist, so dass sich die neue Anlage insbesondere zur Anreicherung von Thermalwasser mit Gas eignet.

## Patentansprüche

1. Verfahren zum Einbringen von einem oxidierenden Gas oder Gasgemisch in Wasser, wobei das Gas oder Gasgemisch und das Wasser auf getrennten Pfaden (A, B) herangebracht werden, das Wasser längs dem zweiten Pfad (B) durch eine erste Feinstfilterung (5) gereinigt, danach einer Verwirbelung bzw. Versprühung (8) unterzogen und anschliessend mit dem Gas oder Gasgemisch aus dem ersten Pfad (A) zusammengeführt wird und das Gas/Wassergemisch längs einem dritten Pfad (C) einer weiteren Feinstfilterung (10) zugeführt wird,
**dadurch gekennzeichnet,**
**dass** das Gas/Wassergemisch zur Feinstfilterung im dritten Pfad (C) durch einen Adsorbtionskörper in Gestalt eines Formkörpers geführt wird, der aus untereinander verbundenen Körnern eines Adsorbtionsmittels, insbesondere Aktivkohle, besteht, wobei die Körner des Adsorbtionsmittels in der Reststruktur eines verschwelten, mindestens teilweise offenporig verkokten und Mikroporen aufweisenden organischen Bindemittels fixiert sind, wobei die Reststruktur des Bindemittels eine Körnigkeit aufweist, welche Makroporen zwischen den Körnern des Adsorbtionsmittels freilässt.

2. Verfahren nach Patentanspruch 1, **dadurch gekennzeichnet, dass** das Gas oder Gasgemisch auf etwa Zimmertemperatur vortemperiert und/oder das Wasser aus einem Verteilungsnetz stammt.

3. Verfahren nach Patentanspruch 1 oder 2, **dadurch gekennzeichnet, dass** das Gas oder Gasgemisch in dem ersten Pfad (A) auf einen Druck gebracht wird, der sich vom Druck des Wassers in dem zweiten Pfad (B) unterscheidet und vorzugsweise ca. 0,5 bar tiefer ist als der Druck des Wassers.

4. Verfahren nach einem der Patentansprüche 1 bis 3, **dadurch gekennzeichnet, dass** der Druck des Wassers im Pfad (B) im Bereich von 2 bis 10 bar, vorzugsweise von 4 bis 8 bar liegt.

5. Verfahren nach einem der Patentansprüche 1 bis 4, **dadurch gekennzeichnet, dass** für die zweite Feinstfilterierung eine Verweilzeit von ca. 15 Minuten vorgesehen ist.

6. Anlage zur Durchführung des Verfahrens nach wenigstens einem der Patentansprüche 1 bis 5, **dadurch gekennzeichnet,**
- **dass** ein erster Leitungssystem-Ast (A) einen seinem Eingang nachgeschalteten Gas-Druckregler (1) aufweist, welchem eine Mengen-Dosierungsdrossel (2) und ein Gas-Rückschlagventil (3) nachgeschaltet sind, und
- **dass** ein zweiter Leitungssystem-Ast (B) einen seinem Eingang nachgeschalteten Flüssigkeits-Druckregler (4) aufweist, dem eine Flüssigkeits-Feinstfilteranordnung (5), ein Flüssigkeits-Rückschlagventil (7) und eine Einrichtung zur Verwirbelung bzw. Versprühung (8) zur Feinverteilung der Flüssigkeit nachgeschaltet sind,
- wobei der Ausgang der Einrichtung (8) zur Feinverteilung mit einem ersten Eingang einer zur Erzeugung eines Gas/Flüssigkeitsgemisches vorgesehenen Injektoreinheit (9) und der Ausgang des Gas-Rückschlagventils (3) mit einem zweiten Eingang der Injektoreinheit (9) verbunden sind, und
- **dass** die Injektoreinheit (9) den Eingang eines dritten Leitungssystem-Astes (C) der Anlage (12) bildet, welcher eine Gemisch-Feinstfilteranlage (10) aufweist, deren Ausgang über einen Gemisch-Druckregler (11) mit dem Ausgang der Anlage (12) in Verbindung steht.
- wobei die Gemisch-Feinstfilteranlage (10) einen Absorbtionskörper in Gestalt eines Formkörpers aufweist, der aus untereinander verbundenen Körnern eines Adsorbtionsmittels, insbesondere Aktivkohle besteht, wobei die Körner des Adsorbtionsmittels in der Reststruktur eines verschwelten, mindestens teilweise offenporig verkokten und Mikroporen aufweisenden organischen Bindemittels fixiert sind, wobei die Reststruktur des Bindemittels eine Körnigkeit aufweist, welche Makroporen zwischen den Körnern des Adsorbtionsmittels freilässt.

7. Anlage nach Anspruch 6, **dadurch gekennzeichnet, dass** die Gemisch-Feinstfilteranlage ein Molekularsieb ist mit einer Filterfreinheit von unter 0,5 µm, vorzugsweise 0,3 µm.

8. Anlage nach Anspruch 6 oder 7, **dadurch gekennzeichnet, dass** das als Bindemittel hochmolekulares Polyäthylen verwendet ist.

9. Anlage nach einem der Ansprüche 6 bis 8, **dadurch gekennzeichnet, dass** ein Bindemittel-Granulat verwendet ist, dessen Körner offene Mikroporen aufweisen.

10. Anlage nach Anspruch 8, **dadurch gekennzeichnet, dass** vor dem Mischen des Bindemittels mit dem Adsorbtionsmittel eine Vormischung des Bindemittel-Granulats mit staubfeiner Kohle durchgeführt ist.

11. Anlage nach wenigstens einem der Ansprüche 6 bis 10, **dadurch gekennzeichnet, dass** der Formkörper an seiner Filtrat-Eintrittsseite zwecks Oberflächenvergrösserung mit rillenförmigen Vertiefungen versehen ist.

12. Anlage nach Anspruch 6, **dadurch gekennzeichnet, dass** mindestens an der Filtrat-Eintrittsseite des adsorbtiven Formköpers eine poröse Stützwand als mechanisches Feinfiltern vorgesehen ist.

13. Anlage nach Anspruch 12, **dadurch gekennzeichnet, dass** die Stützwand als Sinterkörper hergestellt ist.

14. Anlage nach Anspruch 13, **dadurch gekennzeichnet, dass** der ausgeformte Absorptionsköprer in eine die Gestalt der Stützwand bestimmende, zweite Form eingebracht, mit einem sinterbaren Granulat hinterfüllt und dieses in sich selbst und mit dem Adsorptionskörper versintert ist.

15. Anlage nach Anspruch 14, **dadurch gekennzeichnet, dass** für das sinterbare Granulat ein thermoplastischer Kunststoff, vorzugsweise Polyäthylen verwendet ist.

## Claims

1. Method of introducing an oxidising gas or gas mixture into water, wherein the gas or gas mixture and the water are supplied along separate paths (A, B), the water is purified along the second path (B) by a first very fine filtering arrangement (5), then subjected to a vortexing or spraying (8) respectively and subsequently combined with the gas or gas mixture from the first path (A), and the gas/water mixture is conveyed along a third path (C) to an additional very fine filtering apparatus (10), **characterised in that** the gas/water mixture is conducted to the very fine filtering apparatus in the third path (C) through an adsorption body in the form of a moulded body, which is made from interconnected granules of an adsorption agent, more especially active carbon, the granules of the adsorption agent being fixed in the residual structure of a carbonised, organic bonding agent, which is coked at least partially in an open-pored manner and comprises micropores, the residual structure of the bonding agent having a granularity which leaves macropores free between the granules of the adsorption agent.

2. Method according to claim 1, **characterised in that** the gas or gas mixture is pre-tempered to about room temperature and/or the water originates from a distribution network.

3. Method according to claim 1 or 2, **characterised in that** the gas or gas mixture in the first path (A) is brought to a pressure which differs from the pressure of the water in the second path (B) and is preferably approx. 0.5 bar lower than the pressure of the water.

4. Method according to one of claims 1 to 3, **characterised in that** the pressure of the water in the path (B) lies within the range of between 2 and 10 bar, preferably between 4 and 8 bar.

5. Method according to one of claims 1 to 4, **characterised in that** a dwell-time of approx. 15 minutes is provided for the second very fine filtration.

6. Apparatus for accomplishing the method according to at least one of claims 1 to 5, **characterised**
- **in that** a first conduit system branch (A) has, downstream of its inlet, a gas pressure regulator (1), downstream of which are provided a quantity-metering shut-off means (2) and a gas non-return valve (3), and
- **in that** a second conduit system branch (B) has, downstream of its inlet, a liquid pressure regulator (4), downstream of which are provided a very fine liquid filtering arrangement (5), a liquid non-return valve (7) and a vortexing or spraying means (8) respectively for finely distributing the liquid,
- the outlet of the means (8) for the fine distribution being connected to a first inlet of an injector unit (9) provided to produce a gas/liquid mixture, and the outlet of the gas non-return valve (3) being connected to a second inlet of the injector unit (9), and
- **in that** the injector unit (9) forms the inlet of a third conduit system branch (C) of the apparatus (12), which branch has a very fine mixture filtering apparatus (10), the outlet of which communicates with the outlet of the apparatus via a mixture pressure regulator (11),
- the very fine mixture filtering apparatus (10) having an absorption body in the form of a moulded body, which is made from interconnected granules of an adsorption agent, more especially active carbon, the granules of the adsorption agent being fixed in the residual structure of a carbonised, organic bonding agent, which is coked at least partially in an open-pored manner and comprises micropores, the residual structure of the bonding agent having a granularity which leaves macropores free between the granules of the adsorption agent.

7. Apparatus according to claim 6, **characterised in that** the very fine mixture filtering apparatus is a molecular sieve having a grade of filtration of less than 0.5 µm, preferably 0.3 µm.

8. Apparatus according to claim 6 or 7, **characterised in that** highmolecular polyethylene is used as the bonding agent.

9. Apparatus according to one of claims 6 to 8, **characterised in that** a bonding agent granulate is used, the granules of which have open micropores.

10. Apparatus according to claim 8, **characterised in that**, prior to mixing the bonding agent with the adsorption agent, the bonding agent granulate is pre-mixed with powdered carbon.

11. Apparatus according to at least one of claims 6 to 10, **characterised**
**in that** the moulded body is provided with groove-like recesses on its filtrate inlet side for the purpose of increasing the surface.

12. Apparatus according to claim 6, **characterised in that**, at least on the filtrate inlet side of the adsorbent moulded body, a porous supporting wall is provided as a mechanical fine filter.

13. Apparatus according to claim 12, **characterised in that** the supporting wall is produced as a sintered body.

14. Apparatus according to claim 13, **characterised in that** the moulded absorption body is introduced into a second mould which determines the form of the supporting wall, said wall is back-filled with a sinterable granulate, and said granulate is sintered into itself and with the adsorption body.

15. Apparatus according to claim 14, **characterised in that** a thermoplastic plastics material, preferably polyethylene, is used for the sinterable granulate.

## Revendications

1. Procédé pour introduire un gaz ou un mélange de gaz oxydants dans l'eau, dans lequel le gaz ou le mélange de gaz et l'eau sont apportés par des chemins séparés (A, B), l'eau est purifiée le long du deuxième chemin (B) par un premier filtrage ultra-fin (5), ensuite est soumise à un tourbillonnement ou à une pulvérisation (8) et ensuite est réunie au gaz ou au mélange de gaz provenant du premier chemin (A), et le mélange gaz/eau est amené le long d'un troisième chemin (C) à un autre filtrage ultra-fin (10),
**caractérisé en ce que**
le mélange gaz/eau en vue du filtrage ultra-fin est conduit dans un troisième chemin (C) à travers un solide d'adsorption sous la forme d'un solide moulé qui consiste en des grains reliés les uns parmi les autres d'un agent d'adsorption, en particulier du charbon actif, dans lequel les grains de l'agent d'adsorption sont fixés dans la structure résiduelle d'un agent de liaison organique possédant des micropores, carbonisé à basse température et cokéfié au moins partiellement en pores ouverts, grâce à quoi la structure résiduelle de l'agent de liaison possède une granulosité qui laisse des macropores entre les grains de l'agent d'adsorption.

2. Procédé selon la revendication 1,
**caractérisé en ce que**
le gaz ou le mélange de gaz est prétempéré à environ la température ambiante, et/ou l'eau provient d'un réseau de distribution.

3. Procédé selon l'une quelconque des revendications 1 ou 2,
**caractérisé en ce que**
le gaz ou le mélange de gaz dans le premier chemin (A) est amené à une pression qui se différencie de la pression de l'eau dans le deuxième chemin (B), et de préférence est plus basse d'environ 0,5 bar que la pression de l'eau.

4. Procédé selon l'une quelconque des revendications 1 à 3,
**caractérisé en ce que**
la pression de l'eau dans le chemin (B) se situe dans la zone de 2 à 10 bars, de préférence de 4 à 8 bars.

5. Procédé selon l'une quelconque des revendications 1 à 4,
**caractérisé en ce qu'**
on prévoit pour le deuxième filtrage ultra-fin un temps de séjour d'environ 15 minutes.

6. Installation pour l'exécution du procédé selon au moins l'une quelconques des revendications 1 à 5,
**caractérisée en ce qu'**
- une première branche de système de conduites (A) possède un régulateur de pression pour gaz (1) post-connecté à son entrée et auquel un étranglement de dosage en quantités (2) et un clapet antiretour pour gaz (3) sont post-connectés, et
- une deuxième branche de système de conduites (B) possède un régulateur de pression pour liquides (4) post-connecté à son entrée et auquel une installation de filtrage ultra-fin de liquide (5), un clapet antiretour pour liquide (7) et un dispositif pour tourbillonnement ou pulvérisation (8) en vue de la division fine du liquide, sont postconnectés,
- la sortie du dispositif (8) en vue de la division fine est reliée à une première entrée d'un élément d'injecteur (9) prévu pour l'obtention d'un mélange gaz/liquide et la sortie du clapet antiretour pour gaz (3) est reliée à une deuxième entrée de l'élément d'injecteur (9), et
- l'élément d'injecteur (9) forme l'entrée d'une troisième branche de système de conduites (C) de l'installation (12), avec une installation de filtrage ultra-fin de mélange (10) dont la sortie se tient en liaison par l'intermédiaire d'un régulateur de pression pour mélange (11) avec la sortie de l'installation (12),
- l'installation de filtrage ultra-fin de mélange (10) possède un solide d'adsorption sous la forme d'un corps moulé qui consiste en des grains reliés les uns parmi les autres d'un agent d'adsorption, en particulier du charbon actif, dans lequel les grains de l'agent d'adsorption sont fixés dans la structure résiduelle d'un agent de liaison organique carbonisé à basse température, cokéfié au moins partiellement avec des pores ouverts et possédant des micropores, dans laquelle la structure résiduelle de l'agent de liaison possède une granulosité qui laisse ouverts des macropores entre les grains de l'agent d'adsorption.

7. Installation selon la revendication 6,
**caractérisée en ce que**
l'installation de filtre ultra-fin de mélange est un tamis moléculaire ayant une finesse de filtre inférieure à 0,5 µm, de préférence à 0,3 µm.

8. Installation selon l'une quelconque des revendications 6 ou 7,
**caractérisée en ce qu'**
on utilise le polyéthylène à haut poids moléculaire comme agent de liaison.

9. Installation selon l'une quelconque des revendications 6 à 8,
**caractérisée en ce qu'**
on utilise un granulé d'agent de liaison dont les grains possèdent des micropores ouverts.

10. Installation selon la revendication 8,
**caractérisée en ce qu'**
avant le mélange de l'agent de liaison avec l'agent d'adsorption on effectue un prémélange du granulé d'agent de liaison avec du charbon actif en poussière fine.

11. Installation selon l'une quelconque des revendications 6 à 10,
**caractérisée en ce que**
le solide moulé sur le côté d'entrée du filtrat est pourvu de cavités en forme de rainures aux fins d'un agrandissement de surface.

12. Installation selon la revendication 6,
**caractérisée en ce qu'**
au moins sur le côté d'entrée du filtrat du solide moulé pour adsorption on dispose une cloison de support poreuse en tant que filtres fins mécaniques.

13. Installation selon la revendication 12,
**caractérisée en ce que**
la cloison de support est produite sous forme de corps fritté.

14. Installation selon la revendication 13,
**caractérisée en ce que**
le solide d'adsorption moulé est introduit sous une deuxième forme déterminant la forme de la cloison de support, remplie par derrière avec un granulé susceptible d'être fritté et celui-ci est fritté en soi même et avec le solide d'adsorption.

15. Installation selon la revendication 14,
**caractérisée en ce qu'**
on utilise pour le granulé susceptible d'être fritté, une matière plastique thermoplastique, de préférence du polyéthylène.
